# EUROPEAN PATENT APPLICATION

(11) **EP 4 836 557 A1**
(43) Date of publication of application: **04.11.2026**
(21) Application number: 23962815.9
(22) Date of filing: 29.12.2023
(51) Int. Cl.: H04W 72/0446

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LI, Meng, Dongguan, Guangdong 523860 (CN); GAN, Lu, Dongguan, Guangdong 523860 (CN)
(74) Representative: RGTH
(86) International application number: PCT/CN2023/143353
(87) International publication number: WO 2025/138141

(57) **Abstract**

Provided are a wireless communication method and a communication device. The method comprises: acquiring a first mapping order associated with sensing reference signals; and receiving the sensing reference signals on the basis of the first mapping order, wherein the first mapping order is used for indicating a mapping order of a signal sequence of the sensing reference signals on transmission resources. In the embodiments of the present application, sensing reference signals can be associated with a mapping order (also referred to as "a first mapping order"), and the mapping order is used for indicating a mapping order of a signal sequence of the sensing reference signals on transmission resources. The mapping order cannot be acquired by attackers, and compared with a conventional sensing reference signal mapping process, all sensing reference signals are mapped to transmission resources on the basis of a generation order of the sensing reference signals, thereby increasing the difficulty for attackers to attack the sensing reference signals, and improving the security of the sensing reference signals.

## Description

### TECHNICAL FIELD

This application relates to the field of communications technologies, and more specifically, to a wireless communication method and a communications device.

### BACKGROUND

In some scenarios, a sensing function may track and potentially identify any target in an environment, for example, a sensing function in a health medical scenario may sense relevant data such as human respiration, or heartbeat. However, a signal structure of the sensing reference signal used by the sensing function is disclosed. In this case, an attacker may blindly detect the sensing reference signal on a transmission resource based on the disclosed signal structure, so as to obtain user privacy data, resulting in low security of the sensing function.

### SUMMARY

This application provides a wireless communication method and a communications device. The following describes aspects related to this application.

According to a first aspect, a wireless communication method executed by a terminal device is provided, including: acquiring a first mapping order associated with a sensing reference signal; and receiving the sensing reference signal based on the first mapping order, where the first mapping order is used to indicate a mapping order of a signal sequence of the sensing reference signal on a transmission resource.

According to a second aspect, a wireless communication method executed by a network device is provided, including: generating a first mapping order associated with a sensing reference signal; and transmitting the sensing reference signal to a terminal device by using a transmission resource, where the first mapping order is used to indicate a mapping order of a signal sequence of the sensing reference signal on the transmission resource.

According to a third aspect, a wireless communication method executed by a terminal device is provided, including: receiving first information, where the first information is used to determine a first mapping order associated with a sensing reference signal, and the first mapping order is used to indicate a mapping order of a signal sequence of the sensing reference signal on a transmission resource; and receiving or transmitting the sensing reference signal based on the first mapping order.

According to a fourth aspect, a wireless communication method executed by an access network device is provided, including: receiving first information, where the first information is used to determine a first mapping order associated with a to-be-transmitted sensing reference signal, and the first mapping order is used to indicate a mapping order of a signal sequence of the sensing reference signal on a transmission resource; and receiving or transmitting the sensing reference signal based on the first mapping order.

According to a fifth aspect, a terminal device is provided, including: a processing unit, configured to acquire a first mapping order associated with a sensing reference signal; and a receiving unit, configured to receive the sensing reference signal based on the first mapping order, where the first mapping order is used to indicate a mapping order of a signal sequence of the sensing reference signal on a transmission resource.

According to a sixth aspect, a network device is provided, including: a processing unit, configured to generate a first mapping order associated with a sensing reference signal; and a transmitting unit, configured to transmit the sensing reference signal to a terminal device by using a transmission resource, where the first mapping order is used to indicate a mapping order of a signal sequence of the sensing reference signal on the transmission resource.

According to a seventh aspect, a terminal device is provided, including: a receiving unit, configured to receive first information, where the first information is used to determine a first mapping order associated with a sensing reference signal, and the first mapping order is used to indicate a mapping order of a signal sequence of the sensing reference signal on a transmission resource; and a communications unit, configured to receive or transmit the sensing reference signal based on the first mapping order.

According to an eighth aspect, an access network device is provided, including: a receiving unit, configured to receive first information, where the first information is used to determine a first mapping order associated with a to-be-transmitted sensing reference signal, and the first mapping order is used to indicate a mapping order of a signal sequence of the sensing reference signal on a transmission resource; and a communications unit, configured to receive or transmit the sensing reference signal based on the first mapping order.

In embodiments of this application, the sensing reference signal may be associated with a mapping order (also referred to as a "first mapping order"), and the mapping order is used to indicate a mapping order of a signal sequence of the sensing reference signal on a transmission resource. The mapping order cannot be obtained by an attacker. Compared with a conventional sensing reference signal mapping process, all sensing reference signals are mapped to a transmission resource according to a generation order of sensing reference signals in this application, thereby increasing difficulty of attacking sensing reference signals by the attacker and improving security of sensing reference signals.

### BRIEF DESCRIPTION OF DRAWINGS

FIG. 1 shows a wireless communications system 100 to which embodiments of this application are applied.
FIG. 2 is a schematic diagram of a sensing scenario to which embodiments of this application adapt.
FIG. 3 is a schematic diagram of a wireless communication method according to an embodiment of this application.
FIG. 4 is a schematic diagram of a wireless communication method according to an embodiment of this application.
FIG. 5 is a schematic diagram of resource mapping according to an embodiment of this application.
FIG. 6 to FIG. 9 are schematic diagrams of a method for transmitting first information according to an embodiment of this application.
FIG. 10 is a schematic diagram of a terminal device according to an embodiment of this application.
FIG. 11 is a schematic diagram of a network device according to an embodiment of this application.
FIG. 12 is a schematic diagram of a terminal device according to an embodiment of this application.
FIG. 13 is a schematic diagram of a network device according to an embodiment of this application.
FIG. 14 is a schematic diagram of a terminal device according to an embodiment of this application.
FIG. 15 is a schematic diagram of a sensing function device according to an embodiment of this application.
FIG. 16 is a schematic diagram of a sensing function device according to an embodiment of this application.
FIG. 17 is a schematic structural diagram of a communications apparatus according to an embodiment of this application.

### DESCRIPTION OF EMBODIMENTS

Technical solutions in this application are described below with reference to the accompanying drawings.

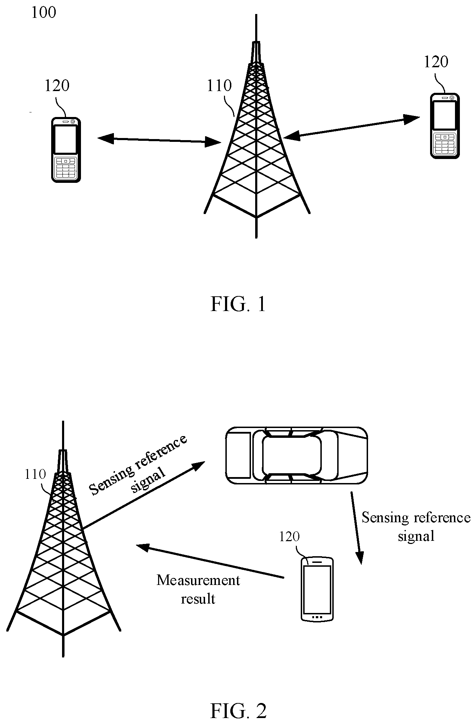

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system, a new radio (new radio, NR) system, a long term evolution (long term evolution, LTE) system, an LTE frequency division duplex (LTE frequency division duplex, FDD) system, or an LTE time division duplex (time division duplex, TDD) system. The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be a fixed or mobile base station. For example, a helicopter or an unmanned aerial vehicle may be configured to serve as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. A scenario in which the network device and the terminal device are located is not limited in embodiments of this application.

It should be understood that all or some of functions of the communications device in this application may also be implemented by software functions running on hardware, or by virtualization functions instantiated on a platform (for example, a cloud platform).

### Sensing scenario

FIG. 2 is a schematic diagram of a sensing scenario to which embodiments of this application adapt. Referring to FIG. 2, a network device transmits a sensing reference signal, and correspondingly, the terminal device receives and measures a reflected echo signal obtained after the sensing reference signal passes through a sensing target, to obtain a measurement result. Then, the terminal device may transmit the measurement result to an access network device.

In some implementations, the access network device may modulate a sensing reference signal based on quadrature phase shift keying (quadrature phase shift keying, QPSK).

In some implementations, the sensing reference signal may be one or more of the following: a demodulation reference signal (demodulation reference signal, DM-RS), a channel state information reference signal (channel state information reference signal, CSI-RS), and a positioning reference signal (positioning reference signal, PRS).

### PRS sequence generation and configuration parameters

Because the PRS has a strong anti-noise capability and a good self/cross-correlation characteristic, the PRS is suitable for a sensing function. The following describes sequence generation, resource mapping and parameter configuration of the PRS.

A reference signal sequence *r*(*m*) of the PRS may be determined based on a formula $r \left(m\right) = \frac{1}{\sqrt{2}} \left(1-2c\left(2m\right)\right) + j \frac{1}{\sqrt{2}} \left(1-2c\left(2m+1\right)\right)$, where a pseudo-random sequence *c*(*i*) may be generated based on a pseudo-random sequence generator, and the pseudo-random sequence generator is initialized to: $\begin{matrix}{c}_{init} = \left({2}^{22}\left⌊\frac{{n}_{ID , seq}^{PRS}}{1024}\right⌋+{2}^{10}\left({N}_{symb}^{slot}{n}_{s , f}^{μ}+l+\right.\right. \\ \left.1\right) \left(2\left({n}_{ID , seq}^{PRS} mod 1024\right)+1\right) + \left.\left({n}_{ID , seq}^{PRS} mod 1024\right)\right) mod {2}^{31}\end{matrix}$ , where ${n}_{s , f}^{μ}$ represents a quantity of slots, a downlink PRS sequence ID ${n}_{ID , seq}^{PRS} ∈ \left\{0,1,…,4095\right\}$, a downlink PRS sequence ID is determined based on a high layer parameter "dl-PRS-SequenceID" and a parameter "l", and the parameter "l" represents an orthogonal frequency division multiplexing (orthogonal frequency division multiplexing, OFDM) symbol index of an intra-slot mapping sequence.

A configuration parameter structure of the PRS may include three layers, and the three layers may be represented, in a descending order, as: a positioning frequency layer (positioning frequency layer), a PRS resource set, and a PRS resource. That is, one positioning frequency layer may include multiple PRS resource sets, and one PRS resource set may include multiple PRS resources.

In the PRS configuration parameters, some parameters are at a layer level, that is, the parameter function range of this level is all resources included in this layer. Some parameters are at a PRS resource set level, and the function range of the parameters is all PRS resources in the PRS resource set. Some parameters are at a PRS resource level, and the function range of the parameters is the PRS resource.

In some scenarios, a sensing function may track and potentially identify any target in an environment, for example, a sensing function in a health medical scenario may sense relevant data such as human respiration, or heartbeat. However, a signal structure of the sensing reference signal used by the sensing function is disclosed. In this case, an attacker may blindly detect the sensing reference signal on a time-frequency resource based on the disclosed signal structure, so as to obtain user privacy data, resulting in low security of the sensing function.

For example, the sensing reference signal is a PRS. It is assumed that after generating a PRS sequence, the network device maps the PRS sequence to a time-frequency resource to form a PRS resource. In addition, the formed PRS resource is repeated on the time-frequency resource according to a specific rule, to form a PRS resource set, and then the PRS resource set is transmitted to the terminal device. In this case, the attacker cannot obtain the configuration parameter of the PRS, but may perform blind detection on the PRS based on the disclosed signal structure of the sensing reference signal. A search space for obtaining the PRS by the attacker is approximately 9.537E+27≈2⁹³ by means of analysis, resulting in that security of the sensing reference signal is far less than security of a 128-bit key, where the security of the 128-bit key is a basic security requirement in a current communication process.

Therefore, for the foregoing problem, an embodiment of this application provides a wireless communication method. In this method, a sensing reference signal may be associated with a mapping order (hereinafter referred to as a "first mapping order"), and the mapping order is used to indicate a mapping order of a signal sequence of the sensing reference signal on a transmission resource. The mapping order cannot be obtained by an attacker. Compared with a conventional sensing reference signal mapping process, all sensing reference signals are mapped to a transmission resource according to a generation order of sensing reference signals in this application, thereby increasing difficulty of attacking sensing reference signals by the attacker and improving security of sensing reference signals.

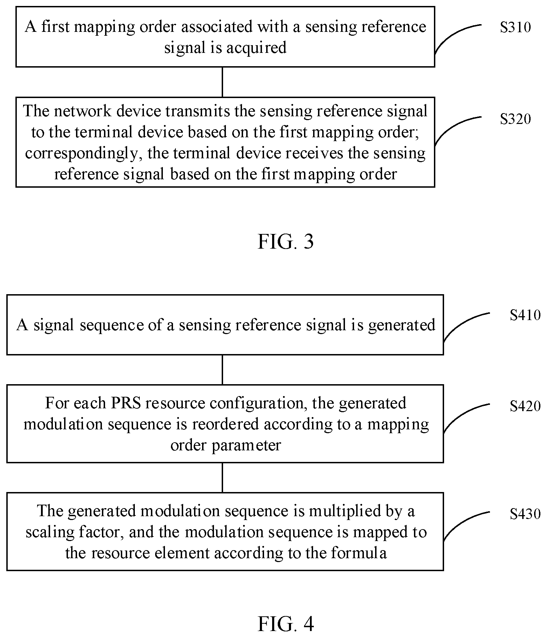

The following describes a wireless communication method according to an embodiment of this application with reference to FIG. 3. The method shown in FIG. 3 includes step S310 to step S320.

In step S310, a first mapping order associated with a sensing reference signal is acquired.

In some implementations, the first mapping order is used to indicate a mapping order of a signal sequence of the sensing reference signal on a transmission resource. For example, the transmission resource may be a time domain symbol. Correspondingly, the first mapping order may be used to indicate a mapping order of a signal sequence on the time domain symbol. In this case, the first mapping order is also referred to as a resource symbol order (resource symbol order). Certainly, in embodiments of this application, the transmission resource is not limited. For example, the transmission resource may be a resource element (resource element, RE). For another example, the transmission resource may be a resource block (resource block, RB).

In some implementations, the sensing reference signal being associated with the first mapping order may be understood as that there is an association relationship between the sensing reference signal and the first mapping order. In embodiments of this application, the association relationship is not limited. For example, the association relationship may indicate a one-to-one correspondence between the sensing reference signal and the mapping order. For another example, the association relationship may indicate a many-to-one correspondence between the sensing reference signal and the mapping order.

In some implementations, the device that performs step S310 may be a terminal device and/or a network device.

In step S320, the network device transmits the sensing reference signal to the terminal device based on the first mapping order. Correspondingly, the terminal device receives the sensing reference signal based on the first mapping order.

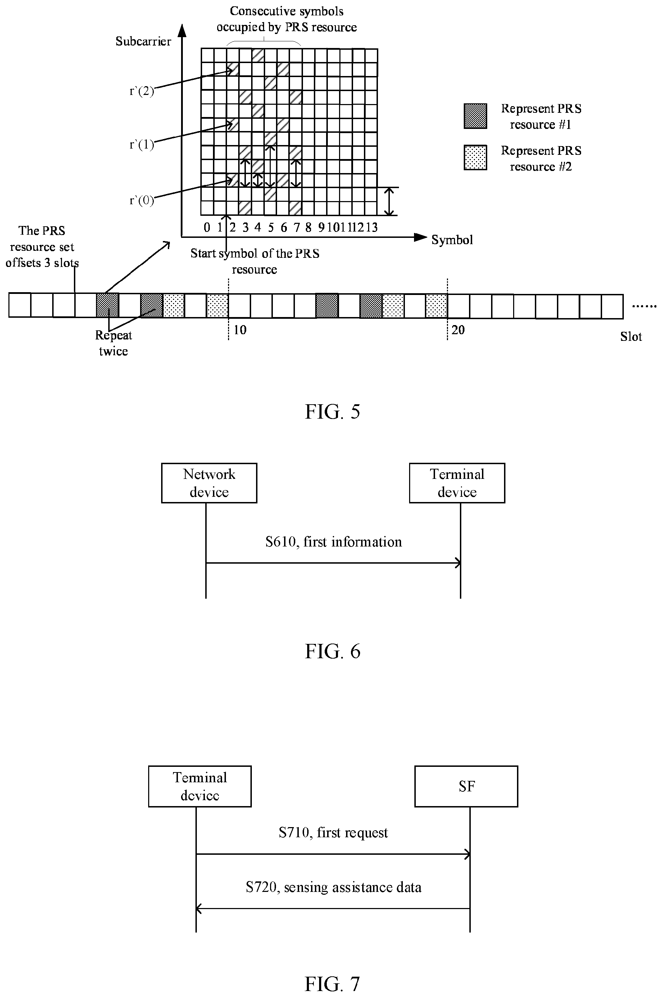

The following describes a first mapping order generation manner in an embodiment of this application based on FIG. 4 and FIG. 5 by using an example in which a sensing reference signal is a PRS. The method shown in FIG. 4 includes step S410 to step S430.

In step S410, a signal sequence *r*(*m*) of a sensing reference signal is generated.

In some implementations, a pseudo-random sequence is generated based on the 31-order Gold sequence, and then 2 bits in the pseudo-random sequence are used each time to generate a modulation sequence, for example, to generate *r*(0)by using [*c*(*0*)*, c*(*1*)], generate *r*(1) by using [*c*(*2*), *c*(*3*)]*,* until a modulation sequence *r(m)* corresponding to a required quantity of PRS symbols is generated, $r \left(m\right) = \frac{1}{\sqrt{2}} \left(1-2c\left(2m\right)\right) + j \frac{1}{\sqrt{2}} \left(1-2c\left(2m+1\right)\right)$. In which, an initial value of a pseudo-random sequence c (i) is $\begin{matrix}{c}_{init} = \left({2}^{22}\left⌊\frac{{n}_{ID , seq}^{PRS}}{1024}\right⌋+{2}^{10}\left({N}_{symb}^{slot}{n}_{s , f}^{μ}+l+\right.\right. \\ \left.1\right) \left(2\left({n}_{ID , seq}^{PRS} mod 1024\right)+1\right) + \left.\left({n}_{ID , seq}^{PRS} mod 1024\right)\right) mod {2}^{31} , {n}_{s , f}^{μ}\end{matrix}$ represents a quantity of slots, ${N}_{symb}^{slot}$ represents a quantity of consecutive OFDM symbols in each slot, a downlink PRS sequence ID ${n}_{ID , seq}^{PRS} ∈ \left\{0,1,…,4095\right\}$ is configured by using a high layer parameter "dl-PRS-SequenceID", l is an OFDM symbol to which the modulation sequence is mapped, that is, a horizontal coordinate of a time-frequency grid.

Referring to FIG. 5, it is assumed that there are two PRS resource sets of PRS resources, a period of the PRS resource set is 10 slots, and an offset is 3 slots (a start location is a slot 0). The first PRS resource offset is one slot (with slot 0 as a start location), and the second PRS resource offset is four slots (with timeslot 0 as a start location). A PRS resource repetition factor is 2, which means that each PRS resource is repeated twice in all PRS resource set instances, and a time interval between PRS resources is 2, that is, there are two slots between PRS resources.

For the PRS resource # 1, a quantity of OFDM symbols allocated is 6, an OFDM symbol 0 is used as a start location, a start OFDM symbol allocated to the PRS resource is 3, and an interlace size (comb size) of the PRS is 4. An OFDM symbol 0 is used as a start location, and an RE offset in the first OFDM symbol is 2. The relative RE offset of the PRS OFDM symbol may be determined based on that the interlace size of the PRS is 4. That is, for a specified configuration, a quantity of OFDM symbols in a PRS resource allocation range is $l - {l}_{start}^{PRS} = 0 , . . 5 \left(0-based\right)$. The relative RE offset (***k***') in the PRS OFDM symbol is [0 2 1 3 0 2], that is, a bidirectional arrow in FIG. 5 shows these relative offsets. A valid RE offset in the PRS OFDM symbol is. $\left(\left({k}_{offset}^{PRS}+k′\right) mod {K}_{comb}^{PRS}\right) = \left(\left[2 4 3 5 2 4\right]mod 4\right) = \left[2 0 3 1 2 0\right] \left(based 0\right)$.

In step S420, for each PRS resource configuration, the generated modulation sequence (*r*(0), *r*(1), ... , *r*(*M*)) is reordered according to a mapping order parameter to become a modulation sequence (*r*'(0), *r*'(1), ... , *r*'(*M*)).

It should be noted that, a sorting manner may be directly indicated by using a parameter DI-PRS-ResourceSymbolOrder. In this case, a range of the parameter depends on a quantity M of complex value modulation symbols (M is related to k and l in ${a}_{k , l}^{\left(p, μ\right)}$), and a value of the parameter is M!.

In step S430, after a scaling factor *β*_{PRS} is multiplied by *r'*(*m*), the modulation sequence is mapped to the resource element (*k, l*)*_{p,µ}* according to the following formula: ${a}_{k , l}^{\left(p, μ\right)} = {β}_{PRS} r ′ \left(m\right)$ $m = 0 , 1 , …$ $k = {mK}_{comb}^{PRS} + \left(\left({k}_{offset}^{PRS}+k′\right) mod {K}_{comb}^{PRS}\right)$ $l = {l}_{start}^{PRS} , {l}_{start}^{PRS} + 1 , … , {l}_{start}^{PRS} + {L}_{PRS} - 1 .$

Still referring to FIG. 5, the reordered modulation sequence (r '(0),r '(1),...,r'(M)) is sequentially mapped to a first subcarrier, a second subcarrier of the first symbol of the first resource of the PRS, until the modulation sequence is mapped to all subcarriers of the first symbol of the PRS. Then, the modulation sequence is mapped to all subcarriers of the second symbol of the PRS, and by analogy, the modulation sequence is mapped to an entire PRS resource.

It should be noted that other steps in embodiments of this application such as inverse fast fourier transform (inverse fast fourier transform, IFFT), cyclic prefix (cyclic prefix, CP) extension, and antenna port signaling are the same as those in an existing standard. For brevity, details are not described in the following.

In some implementations, the first mapping order may be determined based on chaotic mapping, or the first mapping order is generated based on chaotic mapping, thereby increasing complexity of the first mapping order, and improving security of the sensing reference signal. Certainly, in embodiments of this application, the first mapping order may be generated in another manner.

In embodiments of this application, chaotic mapping is not limited. For example, the chaotic mapping may include one or more of the following: Logistic mapping; Piecewise linear chaotic mapping (Piecewise linear chaotic map, PWLCM); Singer mapping; Gussian (Gussian) mapping; Bernoulli mapping; Chebyshev mapping; Circle mapping; Cubic mapping; And ICMIC mapping.

It is assumed that the chaotic mapping is Logistic mapping, and a random mapping order is generated by using a Chaotic sequence. After the complex value modulation sequence *(r(0), r(1),* ..., *r*(*M*)) is generated, the mapping order is randomly scrambled by using a binary sequence generated by the chaotic sequence. That is, a series of discrete values are generated by using the Logistics mapping method *x*_{*n*-1} = *µxₙ*(1 - *xₙ*), n= 1, 2, 3, where 3.56994≤ *µ* ≤ 4, 0 < *xₙ* < 1. Then, binary conversion is performed on the generated discrete value, that is, ${A}_{n} = \left\{\begin{matrix}0 , & 0 < {x}_{n} < 0.5 \\ 1 , & 0.5 < {x}_{n} < {1}_{n}\end{matrix}\right. , n = 1 , 2 ⋯$

It is assumed that a quantity of subcarriers is M, log₂*M* binary sequences extracted from the chaotic sequence *Aₙ* form a number each time, and finally, a sequence *Vₙ* whose length is M is formed, which is referred to as a mapping order factor sequence. Because of good ergodicity of the chaotic mapping, each value from 0 to M-1 may be traversed, so that an order of the sequence *Rₙ* = (*r*(0), *r*(1), ... , *r*(*M*)) is randomly scrambled. The scrambled sequence *R'ₙ* is represented as follows: $R {′}_{n} = {R}_{n ′}$ ${V}_{n ′} = n - 1 .$

It should be noted that, the foregoing is described by using an example in which the sensing reference signal is transmitted by using a downlink. The solution in embodiments of this application may be further applied to a scenario in which the sensing reference signal is transmitted by using an uplink. Certainly, the solution in embodiments of this application may be further applied to a scenario in which the sensing reference signal is transmitted by using a sidelink.

As described above, to improve security of the sensing reference signal, a first mapping order is introduced. Correspondingly, to improve a success rate of the sensing reference signal transmission, a first mapping relationship needs to be learned by a receiving end and a transmitting end of the sensing signal. Therefore, in embodiments of this application, first information used to determine a first mapping order is introduced, so as to be transmitted between the receiving end and the transmitting end.

In some implementations, the first information may directly carry indication information of the first mapping order. For example, the first information may carry an index of the first mapping order. In another implementation manner, if the first mapping order is determined based on the chaotic mapping, the first information includes a parameter and an initial value of the chaotic mapping, where the parameter may be *µ* described above, and the initial value may be *x*₁ described above.

With reference to FIG. 6, the following describes a first information transmission manner in an embodiment of this application by using a scenario in which a network device communicates with a terminal device as an example. Referring to FIG. 6, in step S610, the network device transmits the first information to the terminal device.

It should be noted that the network device that transmits the first information may be the network device that transmits the sensing reference signal described above. For example, the network device may be an access network device. Certainly, in embodiments of this application, the network device that transmits the first information may not be the network device that transmits the sensing reference signal described above. For example, the network device may be a core network device. With reference to Embodiment 1 and Embodiment 2, the following separately describes a first information transmission solution by using an example in which a network device is an access network device or a core network device.

**Embodiment 1:** The first information may be transmitted by the core network device to the terminal device.

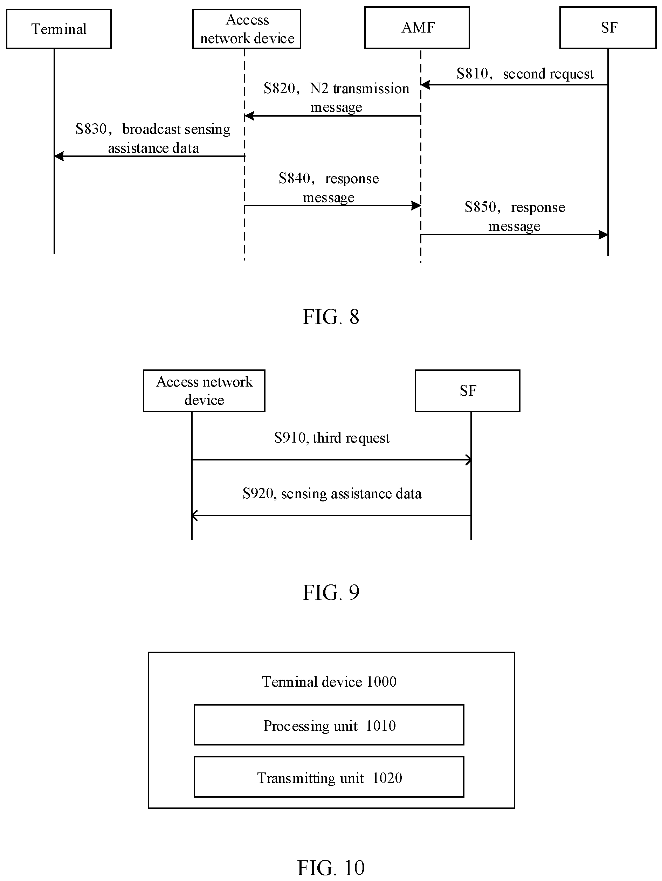

In embodiments of this application, the core network device is not limited. In some implementation manners, the core network device may be a core network device that can obtain the first information. For example, the core network device may be an AMF. The following is described with reference to FIG. 8. In another implementation, the core network device may be a core network device that stores the first information. For example, the core network device may be a sensing function (sensing function, SF). The following is described with reference to FIG. 7.

In some implementation manners, the first information may be carried in sensing assistance data. For example, the sensing assistance data may include configuration information of the sensing reference signal, and correspondingly, the first information may be carried in configuration information of the sensing reference signal. For another example, the configuration information of the sensing reference signal may include time domain resource information and frequency domain resource information. Correspondingly, the first information may be carried in frequency domain resource information of the sensing reference signal.

The sensing reference signal is a PRS, for example. The sensing assistance data (also referred to as "NR-DL-PRS-AssistanceData") includes PRS configuration information (NR-DL-PRS-Info), and correspondingly, the PRS configuration information (nr-DL-PRS-Info) includes time-frequency resource information and frequency domain resource information. In which, the frequency domain resource information may include first information, that is, a first mapping order (also referred to as "Dl-PRS-ResourceSymbolOrder").

Certainly, in embodiments of this application, the first information may be carried in a message transmitted by the core network device to the terminal device in the LPP protocol. For example, if the LMF and the SF are jointly disposed, the LMF may obtain the first information, or the SF stores the first information, the jointly disposed LMF and SF may function as a core network device, and transmit the first information to the terminal device by using the LPP protocol.

In some implementations, the first information may be transmitted based on a request of the terminal device. That is, before step S410, the foregoing method further includes: transmitting, by the terminal device, a first request to the core network device, where the first request is used to request a mapping order of a sensing reference signal, that is, a first mapping order. Certainly, in embodiments of this application, the first information may be actively triggered by the core network device. For example, if the core network device determines that the first information has not been transmitted to the terminal device, the core network device may transmit the first information to the terminal device. For another example, if the core network device determines that the mapping order of the sensing reference signal associated with the terminal device needs to be updated, the core network device may transmit the first information to the terminal device to indicate the updated mapping order of the sensing reference signal, that is, the first mapping order.

In some implementations, the foregoing core network device may be an SF. Certainly, in embodiments of this application, the core network device may be another core network device that obtains or stores the first information.

In some implementations, the second request may be carried in a message transmitted by the terminal device to the core network device in the LTE Positioning Protocol (LTE Positioning Protocol, LPP). For example, if the LMF and the SF are jointly disposed, the LMF may obtain the first information, or the SF stores the first information, the jointly disposed LMF and SF may function as the core network device. In this case, the terminal device may transmit the first request to the core network device by using the LPP protocol.

The following describes a first information transmission method in an embodiment of this application with reference to FIG. 7 by using an example in which a sensing reference signal is a PRS. The method shown in FIG. 7 includes step S710 to step S720.

In step S710, the terminal device transmits a first request to the SF, where the first request is used to request sensing assistance data of the PRS, or the first request is used to request configuration data of the PRS.

In step S720, in response to the first request, the SF transmits sensing assistance data (NR-DL-PRS-AssistanceData) to the terminal device, where the NR-DL-PRS-AssistanceData includes PRS configuration information (NR-DL-PRS-Info), and accordingly, the PRS configuration information (nr-DL-PRS-Info) includes time-frequency resource information and frequency domain resource information. The frequency domain resource information includes a first mapping order Dl-PRS-ResourceSymbolOrder.

**Embodiment 2:** The first information may be transmitted by an access network device.

In some implementations, the first information is transmitted by using a broadcast message. That is, the access network device may transmit the first information to the terminal device in a broadcast manner.

In some implementations, the first information may be carried in a sensing assistance data broadcast message. For the sensing assistance data, one may refer to the description in Embodiment 1.

In embodiments of this application, a manner of obtaining the first information by the access network device is not limited. For example, the core network device may transmit the first information to the access network device.

The core network device is not limited in embodiments of this application. In some implementation manners, the core network device may be a core network device that can obtain the first information. For example, the core network device may be an AMF. The following is described with reference to FIG. 8. In another implementation, the core network device may be a core network device that stores the first information. For example, the core network device may be an SF. The following is described with reference to FIG. 9.

In some implementations, transmitting of the first information may be triggered in response to a request of a core network device. That is, before step S410, the foregoing method further includes: transmitting, by the core network device, a second request to the access network device, where the second request is used to request to transmit the first mapping order of the sensing reference signal to the terminal device, that is, the second request is used to request to transmit the first information to the terminal device.

In some implementations, the core network device may be an SF. For example, the SF may transmit a second request to the access network device via the AMF. Certainly, the foregoing core network device may be an AMF. Correspondingly, after receiving the second request transmitted by the SF, the AMF forwards the second request to the access network device.

In some implementations, the second request transmitted by the SF to the AMF may carry an identifier of an access network device that provides a service for the terminal device, so that the AMF may determine the access network device based on the identifier of the access network device. The identifier of the access network device may be an ID of the access network device or an IP address of the access network device. This is not limited in embodiments of this application.

In some implementations, the second request carries an identifier of the SF and/or a first mapping order, where the identifier of the SF may be a route identifier of the SF. For example, the route identifier of the SF may be an IP address of the SF. Certainly, in embodiments of this application, the identifier of the SF may be an ID of the SF.

In some implementations, the foregoing first mapping order may be an encrypted first mapping order, thereby improving security of transmitting the first mapping order.

In some implementations, the foregoing method further includes: transmitting, by the access network device, a response message for the second request to the core network device, where the response message is used to indicate that the first mapping order has been transmitted, or the response message is used to indicate that the first mapping order has been broadcast to the terminal device.

In some implementations, the foregoing core network device may be an SF. For example, the access network device may transmit a response message to the SF via the AMF. Certainly, the foregoing core network device may be an AMF. Correspondingly, after receiving the response message transmitted by the access network device, the AMF may forward the response message to the SF.

In some implementations, the response message transmitted by the access network device to the AMF may carry an identifier of the SF, so that the AMF may determine the SF based on the identifier of the SF.

The following describes a first information transmission method according to an embodiment of this application with reference to FIG. 8. Referring to FIG. 8, the method includes step S810 to step S850.

In step S810, the SF transmits a second request to the AMF, so as to request to transmit a sensing assistance data message to the terminal device. A service operation corresponding to the request includes transmitting sensing assistance data and an identifier of an access network device, where the sensing assistance data may be encrypted sensing assistance data.

In some implementations, the second request carries the identifier of the access network device and the sensing assistance data. For the sensing assistance data, one may refer to related descriptions in Embodiment 1.

In step S820, the AMF transmits an N2 transmission message to the access network device, where the message carries the second request and a routing identifier of the SF.

In step S830, in response to receiving the N2 transmission message, the access network device broadcasts the sensing assistance data.

In step S840, the access network device transmits a response message to the AMF, where the response message is used to indicate that the sensing assistance data has been broadcast to the terminal device. In some implementations, the response message carries the routing identifier of the SF.

In step S850, the AMF forwards the response message to the SF.

In another implementation, the first information may be transmitted in response to a request of the access network device. That is, before step S410, the foregoing method further includes: transmitting, by the access network device, a third request to the core network device, where the third request is used to request a mapping order of a sensing reference signal, that is, a first mapping order. Certainly, in embodiments of this application, the first information may be actively triggered by the core network device. For example, if the core network device determines that the first information has not been transmitted to the access network device, the core network device may transmit the first information to the access network device. For another example, if the core network device determines that the mapping order of the sensing reference signal associated with the access network device needs to be updated, the core network device may transmit the first information to the access network device to indicate the updated mapping order of the sensing reference signal, that is, the first mapping order.

In some implementations, the foregoing core network device may be an SF. Certainly, in embodiments of this application, the core network device may be another core network device that obtains or stores the first information.

In some implementations, the third request may be carried in a message transmitted by the access network device to the core network device in the LPP protocol. For example, if the LMF and the SF are jointly disposed, the LMF may obtain the first information, or the SF stores the first information, the jointly disposed LMF and SF may function as the core network device. In this case, the access network device may transmit a third request to the core network device by using the LPP protocol.

The following describes a first information transmission method according to an embodiment of this application with reference to FIG. 9. Referring to FIG. 9, the method includes step S910 to step S920.

In step S910, the access network device transmits a third request to the SF, where the third request is used to request a mapping order of a sensing reference signal.

In step S920, in response to the third request, the SF transmits sensing assistance data to the access network device, where the sensing assistance data includes a first mapping order.

It should be noted that in the foregoing solution described with reference to FIG. 9, after obtaining the first information (for example, the first mapping order), the access network device may forward the first information to the terminal device. For example, the access network device may forward the first information to the terminal device in a broadcast manner. Certainly, in embodiments of this application, after obtaining the first mapping order, the access network device may transmit the sensing reference signal based on the first mapping order.

The foregoing describes the method embodiments of this application in detail with reference to FIG. 1 to FIG. 9. The following describes apparatus embodiments of this application in detail with reference to FIG. 10 to FIG. 17. It should be understood that the descriptions of the method embodiments correspond to descriptions of the apparatus embodiments, and therefore, for parts that are not described in detail, reference may be made to the foregoing method embodiments.

FIG. 10 is a schematic diagram of a terminal device according to an embodiment of this application. The terminal device 1000 in FIG. 10 includes a processing unit 1010 and a transmitting unit 1020.

The processing unit 1010 is configured to generate a sensing reference signal.

The transmitting unit 1020 is configured to transmit the sensing reference signal to a network device by using a transmission resource. The sensing reference signal is associated with a first mapping order, and the first mapping order is used to indicate a mapping order of a signal sequence of the sensing reference signal on the transmission resource.

In some implementations, the terminal device further includes a receiving unit, configured to receive first information transmitted by the network device, where the first information is used to determine the first mapping order.

In some implementations, the transmitting unit is configured to transmit a first request to the network device, where the first request is used to request the first mapping order.

In some implementations, the first information is transmitted by using a broadcast message.

In some implementations, the sensing reference signal is a PRS, and the first information is carried in PRS configuration information, or the first information is carried in sensing assistance data.

In some implementations, the first mapping order is determined based on chaotic mapping, and the first information includes a parameter and an initial value of the chaotic mapping.

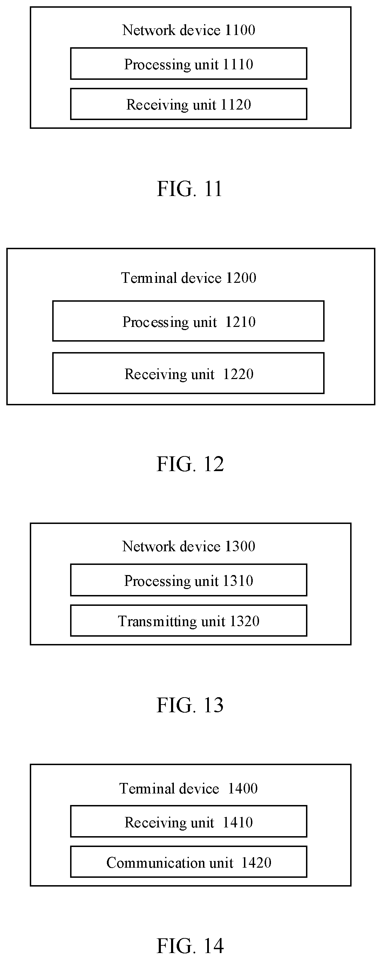

FIG. 11 is a schematic diagram of a network device according to an embodiment of this application. The network device 1100 described in FIG. 11 includes a processing unit 1110 and a receiving unit 1120.

The processing unit 1110 is configured to obtain a first mapping order associated with a sensing reference signal.

The receiving unit 1120 is configured to receive the sensing reference signal based on the first mapping order, where the first mapping order is used to indicate a mapping order of a signal sequence of the sensing reference signal on a transmission resource.

In some implementations, the network device further includes a first transmitting unit, configured to transmit first information to the terminal device, where the first information is used to determine a first mapping order.

In some implementations, the receiving unit 1120 is configured to receive a first request transmitted by the terminal device, where the first request is used to request the first mapping order.

In some implementations, the first information is transmitted by using a broadcast message.

In some implementations, the receiving unit 1120 is configured to receive a second request transmitted by the core network device, where the second request is used to request to transmit the first mapping order to the terminal device.

In some implementations, the second request carries an identifier of the core network device and/or the first mapping order.

In some implementations, the network device further includes: a second transmitting unit, configured to transmit a response message for the second request to the core network device, where the response message is used to indicate that the first mapping order has been transmitted.

In some implementations, the receiving unit 1120 is configured to receive the first information transmitted by the core network device.

In some implementations, the network device further includes: a third transmitting unit, configured to transmit a second request to the core network device, where the second request is used to request the first mapping order.

In some implementations, the sensing reference signal is a PRS, and the first information is carried in PRS configuration information, or the first information is carried in sensing assistance data.

In some implementations, the first mapping order is determined based on chaotic mapping, and the first information includes a parameter and an initial value of the chaotic mapping.

FIG. 12 is a schematic diagram of a terminal device according to an embodiment of this application. The terminal device 1200 in FIG. 12 includes a processing unit 1210 and a receiving unit 1220.

The processing unit 1210 is configured to acquire a first mapping order associated with a sensing reference signal.

The receiving unit 1220 is configured to receive the sensing reference signal based on the first mapping order, where the first mapping order is used to indicate a mapping order of a signal sequence of the sensing reference signal on a transmission resource.

In some implementations, the receiving unit 1220 is configured to receive first information transmitted by the network device, where the first information is used to determine the first mapping order.

In some implementations, the terminal device further includes a first transmitting unit, configured to transmit a first request to the network device, where the first request is used to request the first mapping order.

In some implementations, the first information is transmitted by using a broadcast message.

In some implementations, the sensing reference signal is a PRS, and the first information is carried in PRS configuration information, or the first information is carried in sensing assistance data.

In some implementations, the first mapping order is determined based on chaotic mapping, and the first information includes a parameter and an initial value of the chaotic mapping.

FIG. 13 is a schematic diagram of a network device according to an embodiment of this application. The network device 1300 described in FIG. 13 includes a processing unit 1310 and a receiving unit 1320.

The processing unit 1310 is configured to acquire a first mapping order associated with a sensing reference signal, where the first mapping order is used to indicate a mapping order of a signal sequence of the sensing reference signal on a transmission resource.

The transmitting unit 1320 is configured to transmit the sensing reference signal to a terminal device based on the first mapping order by using the transmission resource.

In some implementations, the method further includes: transmitting first information to the terminal device, where the first information is used to determine the first mapping order.

In some implementations, the receiving unit is configured to receive a first request transmitted by the terminal device, where the first request is used to request the first mapping order.

In some implementations, the first information is transmitted by using a broadcast message.

In some implementations, the receiving unit is configured to receive a second request transmitted by the core network device, where the second request is used to request to transmit the first mapping order to the terminal device.

In some implementations, the second request carries an identifier of the core network device and/or the first mapping order.

In some implementations, the network device further includes: a first transmitting unit, configured to transmit a response message for the second request to the core network device, where the response message is used to indicate that the first mapping order has been transmitted.

In some implementations, the network device is an access network device, and the processing unit 1310 is configured to receive the first information transmitted by a core network device.

In some implementations, the transmitting unit is configured to transmit a second request to the core network device, where the second request is used to request the first mapping order.

In some implementations, the sensing reference signal is a PRS, and the first information is carried in PRS configuration information, or the first information is carried in sensing assistance data.

In some implementations, the first mapping order is determined based on chaotic mapping, and the first information includes a parameter and an initial value of the chaotic mapping.

FIG. 14 is a schematic diagram of a terminal device according to an embodiment of this application. The terminal device 1400 in FIG. 14 includes a receiving unit 1410 and a communications unit 1420.

The receiving unit 1410 is configured to receive first information, where the first information is used to determine a first mapping order associated with a sensing reference signal, and the first mapping order is used to indicate a mapping order of a signal sequence of the sensing reference signal on a transmission resource.

The communications unit 1420 is configured to receive or transmit the sensing reference signal based on the first mapping order.

In some implementations, the method further includes: transmitting a first request to an access network device, where the first request is used to request a first mapping order associated with the sensing reference signal.

In some implementations, the first information is transmitted by using a broadcast message.

In some implementations, the sensing reference signal is a PRS, and the first information is carried in PRS configuration information, or the first information is carried in sensing assistance data.

In some implementations, the first mapping order is determined based on chaotic mapping, and the first information includes a parameter and an initial value of the chaotic mapping.

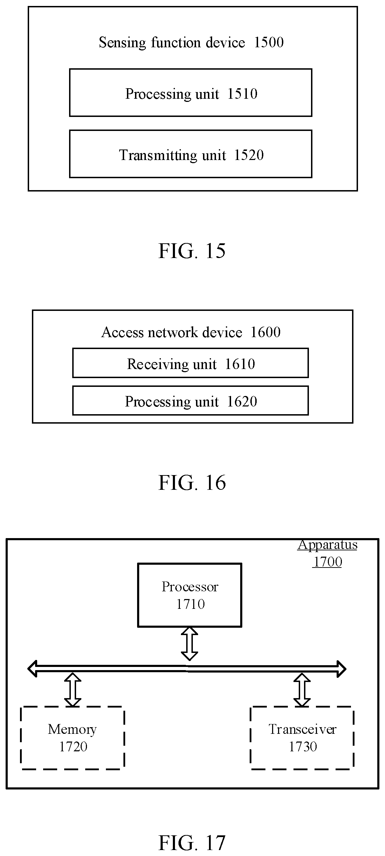

FIG. 15 is a schematic diagram of a sensing function device according to an embodiment of this application. The sensing function device 1500 in FIG. 15 includes a processing unit 1510 and a transmitting unit 1520.

The processing unit 1510 is configured to generate first information, where the first information is used to determine a first mapping order associated with a to-be-transmitted sensing reference signal, and the first mapping order is used to indicate a mapping order of a signal sequence of the sensing reference signal on a transmission resource.

The transmitting unit 1520 is configured to transmit first information, where the first information is used to determine the first mapping order.

In some implementations, the transmitting unit 1520 is configured to transmit first information to a terminal device, where the first information is used to determine a first mapping order.

In some implementations, the sensing function device further includes a first receiving unit, configured to receive a first request transmitted by the terminal device, where the first request is used to request the first mapping order.

In some implementations, the first information is transmitted by using a broadcast message.

In some implementations, the transmitting unit 1520 is configured to transmit a second request to the access network device, where the second request is used to request to transmit the first mapping order to the terminal device.

In some implementations, the second request carries an identifier of the sensing function device and/or the first mapping order.

In some implementations, the sensing function device further includes: a second receiving unit, configured to receive a response message for the second request that is transmitted by the access network device, where the response message is used to indicate that the first mapping order has been transmitted.

In some implementations, the transmitting unit 1520 is configured to transmit the first information to the access network device.

In some implementations, the sensing function device further includes: a third receiving unit, configured to receive a second request transmitted by the access network device, where the second request is used to request the first mapping order.

In some implementations, the sensing reference signal is a PRS, and the first information is carried in PRS configuration information, or the first information is carried in sensing assistance data.

In some implementations, the first mapping order is determined based on chaotic mapping, and the first information includes a parameter and an initial value of the chaotic mapping.

FIG. 16 is a schematic diagram of an access network device according to an embodiment of this application. The access network device 1600 in FIG. 16 includes a receiving unit 1610 and a processing unit 1620.

The receiving unit 1610 is configured to receive first information, where the first information is used to determine a first mapping order associated with a to-be-transmitted sensing reference signal, and the first mapping order is used to indicate a mapping order of a signal sequence of the sensing reference signal on a transmission resource.

The processing unit 1620 is configured to receive or transmit the sensing reference signal based on the first mapping order.

In some implementations, the access network device further includes a first transmitting unit, configured to transmit first information to the terminal device, where the first information is used to determine the first mapping order.

In some implementations, the first information is transmitted by using a broadcast message.

In some implementations, the receiving unit 1610 is configured to receive a second request transmitted by the sensing function device, where the second request is used to request to transmit the first mapping order to the terminal device.

In some implementations, the second request carries an identifier of the sensing function device and/or the first information.

In some implementations, the access network device further includes: a second transmitting unit, configured to transmit a response message for the second request to the sensing function device, where the response message is used to indicate that the first mapping order has been transmitted.

In some implementations, the access network device further includes a third transmitting unit, configured to transmit a third request to a sensing function device, where the third request is used to request the first mapping order.

In some implementations, the sensing reference signal is a PRS, and the first information is carried in PRS configuration information, or the first information is carried in sensing assistance data.

In some implementations, the first mapping order is determined based on chaotic mapping, and the first information includes a parameter and an initial value of the chaotic mapping.

FIG. 17 is a schematic structural diagram of a communications apparatus according to an embodiment of this application. A dashed line in FIG. 17 indicates that the unit or module is optional. The apparatus 1700 may be configured to implement the method described in the foregoing method embodiments. The apparatus 1700 may be a chip, a terminal device, or a network device.

The apparatus 1700 may include one or more processors 1710. The processor 1710 may support the apparatus 1700 to implement the method described in the foregoing method embodiments. The processor 1710 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1700 may further include one or more memories 1720. The memory 1720 stores a program, and the program may be executed by the processor 1710, so that the processor 1710 executes the method described in the foregoing method embodiments. The memory 1720 may be independent of or integrated into the processor 1710.

The apparatus 1700 may further include a transceiver 1730. The processor 1710 may communicate with another device or chip by using the transceiver 1730. For example, the processor 1710 may perform data transmitting and receiving with another device or chip by using the transceiver 1730.

An embodiment of this application further provides a computer-readable storage medium, configured to store a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to a terminal or a network device provided in embodiments of this application, and the computer program causes a computer to execute the methods to be executed by the terminal or the network device in embodiments of this application.

It should be understood that the terms used in this application are merely used to explain specific embodiments of this application, and are not intended to limit this application. The terms "first" and "second" in the specification, claims, and accompanying drawings of this application are used to distinguish between different objects, and are not used to describe a specific sequence. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "preconfigured" may be implemented by prestoring corresponding code or a corresponding table in a device (for example, including a terminal device and a network device) or in other manners that can be used for indicating related information, and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

Some or all of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A wireless communication method executed by a terminal device, comprising:
acquiring a first mapping order associated with a sensing reference signal; and
receiving the sensing reference signal based on the first mapping order, wherein the first mapping order is used to indicate a mapping order of a signal sequence of the sensing reference signal on a transmission resource.

2. The method according to claim 1, wherein before the sensing reference signal is transmitted by using the transmission resource, the method further comprises:
receiving first information transmitted by a network device, wherein the first information is used to determine the first mapping order.

3. The method according to claim 2, wherein before the receiving first information transmitted by the network device, the method further comprises:
transmitting a first request to the network device, wherein the first request is used to request the first mapping order.

4. The method according to claim 2, wherein the first information is transmitted by using a broadcast message.

5. The method according to any one of claims 1 to 4, wherein the sensing reference signal is a PRS, and the first information is carried in PRS configuration information; or
the first information is carried in sensing assistance data.

6. The method according to any one of claims 1 to 5, wherein the first mapping order is determined based on chaotic mapping, and the first information comprises a parameter and an initial value of the chaotic mapping.

7. A wireless communication method executed by a network device, comprising:
generating a first mapping order associated with a sensing reference signal;
transmitting the sensing reference signal to a terminal device by using a transmission resource, wherein the first mapping order is used to indicate a mapping order of a signal sequence of the sensing reference signal on the transmission resource.

8. The method according to claim 7, further comprising:
transmitting first information to the terminal device, wherein the first information is used to determine a first mapping order.

9. The method according to claim 8, wherein before the transmitting first information to a terminal device, the method further comprises:
receiving a first request transmitted by the terminal device, wherein the first request is used to request the first mapping order.

10. The method according to claim 9, wherein the first information is transmitted by using a broadcast message.

11. The method according to claim 10, further comprising:
receiving a second request transmitted by a core network device, wherein the second request is used to request to transmit the first mapping order to the terminal device.

12. The method according to claim 10, wherein the second request carries an identifier of the core network device and/or the first mapping order.

13. The method according to claim 11 or 12, further comprising:
transmitting a response message for the second request to the core network device, wherein the response message is used to indicate that the first mapping order has been transmitted.

14. The method according to any one of claims 8 to 10, wherein the network device is an access network device, and the first mapping order associated with the sensing reference signal is acquired by:
receiving the first information transmitted by the core network device.

15. The method according to claim 14, further comprising:
transmitting a third request to the core network device, wherein the third request is used to request the first mapping order.

16. The method according to any one of claims 7 to 15, wherein the sensing reference signal is a PRS, and the first information is carried in PRS configuration information; or
the first information is carried in sensing assistance data.

17. The method according to any one of claims 7 to 16, wherein the first mapping order is determined based on chaotic mapping, and the first information comprises a parameter and an initial value of the chaotic mapping.

18. A wireless communication method executed by a terminal device, comprising:
receiving first information, wherein the first information is used to determine a first mapping order associated with a sensing reference signal, and the first mapping order is used to indicate a mapping order of a signal sequence of the sensing reference signal on a transmission resource; and
receiving or transmitting the sensing reference signal based on the first mapping order.

19. The method according to claim 18, further comprising:
transmitting a first request to an access network device, wherein the first request is used to request a first mapping order associated with the sensing reference signal.

20. The method according to claim 18, wherein the first information is transmitted by using a broadcast message.

21. The method according to any one of claims 18 to 20, wherein the sensing reference signal is a PRS, and the first information is carried in PRS configuration information; or
the first information is carried in sensing assistance data.

22. The method according to any one of claims 18 to 21, wherein the first mapping order is determined based on chaotic mapping, and the first information comprises a parameter and an initial value of the chaotic mapping.

23. A wireless communication method executed by an access network device, comprising:
receiving first information, wherein the first information is used to determine a first mapping order associated with a to-be-transmitted sensing reference signal, and the first mapping order is used to indicate a mapping order of a signal sequence of the sensing reference signal on a transmission resource; and
receiving or transmitting the sensing reference signal based on the first mapping order.

24. The method according to claim 23, further comprising:
transmitting first information to a terminal device, wherein the first information is used to determine the first mapping order.

25. The method according to claim 24, wherein the first information is transmitted by using a broadcast message.

26. The method according to any one of claims 23 to 25, further comprising:
receiving a second request transmitted by a sensing function device, wherein the second request is used to request to transmit the first mapping order to a terminal device.

27. The method according to claim 26, wherein the second request carries an identifier of the sensing function device and/or the first information.

28. The method according to claim 26 or 27, further comprising:
transmitting a response message for the second request to the sensing function device, wherein the response message is used to indicate that the first mapping order has been transmitted.

29. The method according to claim 28, further comprising:
transmitting a third request to the sensing function device, wherein the third request is used to request the first mapping order.

30. The method according to any one of claims 23 to 28, wherein the sensing reference signal is a PRS, and the first information is carried in PRS configuration information; or
the first information is carried in sensing assistance data.

31. The method according to any one of claims 23 to 30, wherein the first mapping order is determined based on chaotic mapping, and the first information comprises a parameter and an initial value of the chaotic mapping.

32. A terminal device, comprising a unit configured to execute the method according to any one of claims 1 to 6 and 18 to 22.

33. A network device, comprising a unit configured to execute the method according to any one of claims 7 to 17 and 23 to 31.
